Europäisches Patentamt

European Patent Office

Office européen des brevets

(11) Numéro de publication : **0 375 478 B1**

(19)

(12) **FASCICULE DE BREVET EUROPEEN**

(45) Date de publication du fascicule du brevet :
03.06.92 Bulletin 92/23

(21) Numéro de dépôt : **89403209.3**

(22) Date de dépôt : **21.11.89**

(51) Int. Cl.⁵ : **H04L 25/03**

(54) **Démodulateur pour transmission numérique comportant un dispositif de correction automatique des défauts.**

(30) Priorité : **21.11.88 FR 8815103**

(43) Date de publication de la demande :
**27.06.90 Bulletin 90/26**

(45) Mention de la délivrance du brevet :
**03.06.92 Bulletin 92/23**

(84) Etats contractants désignés :
**DE GB NL**

(56) Documents cités :
**EP-A- 0 116 902**
**US-A- 4 027 250**
**US-A- 4 574 244**

(73) Titulaire : **ETAT FRANCAIS représenté par le Ministre des Postes, Télécommunications et de l'Espace (CENTRE NATIONAL D'ETUDES DES TELECOMMUNICATIONS), 38-40 rue du Général Leclerc F-92131 Issy-les-Moulineaux (FR)**

(72) Inventeur : **Delacroix, Eugène**
**76, rue Jullien**
**F-92170 Vanves (FR)**
Inventeur : **Fargeas, Jean-Marc**
**Résidence Vallée 2 - 28, rue Jean Rostand**
**F-91300 Massy Villaine (FR)**
Inventeur : **Imbeaux, Jean-claude**
**69, rue Dunois**
**F-75646 Paris Cédex 13 (FR)**

(74) Mandataire : **Martin, Jean-Jacques et al Cabinet REGIMBEAU 26, Avenue Kléber F-75116 Paris (FR)**

EP 0 375 478 B1

## Description

La présente invention concerne le domaine des transmissions numériques.

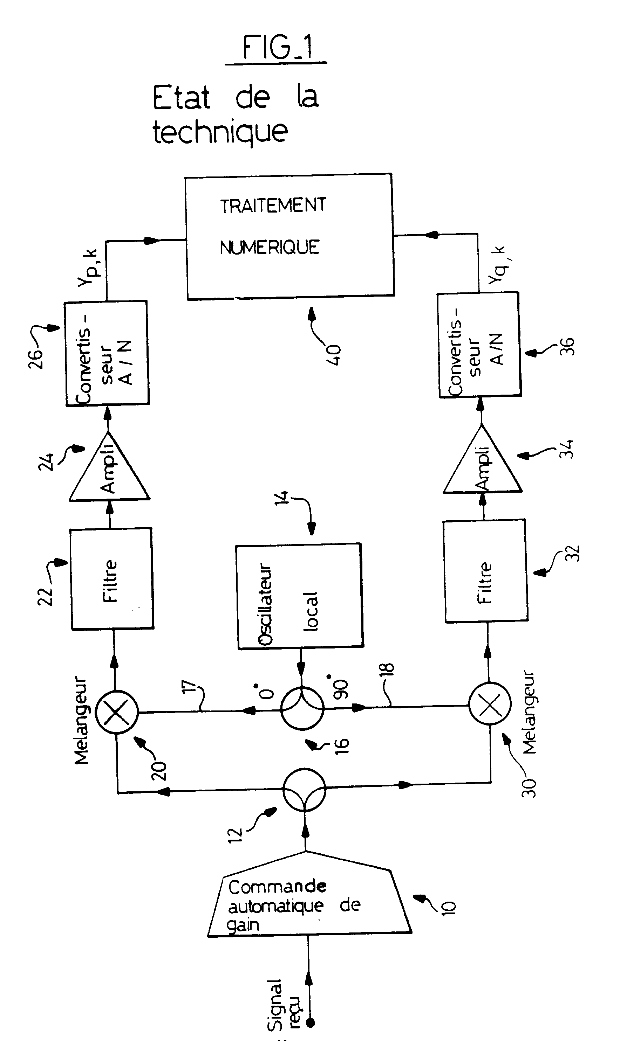

Elle s'applique plus précisément aux démodulateurs pour transmission numérique utilisant les techniques de transposition du signal en bande de base, du type connu en soi, illustré sur la figure 1 annexée.

Comme illustré sur cette figure, dans un tel démodulateur classique, le signal haute fréquence reçu est d'abord amplifié par un circuit à commande automatique de gain 10 destiné à réguler son niveau. Le signal reçu amplifié est ensuite séparé en deux signaux identiques dans un coupleur 12.

En parallèle, le signal de sortie d'un oscillateur local non synchronisé 14, de fréquence nominale proche de celle du signal reçu, est appliqué à une cellule 16 qui délivre sur l'une de ses sorties 17 un signal d'oscillateur en phase et sur sa seconde sortie 18 un signal d'oscillateur en quadrature déphasé de 90°.

L'un des deux signaux issus du coupleur 12 est transposé en bande de base en phase par multiplication, dans un mélangeur 20, avec le signal d'oscillateur en phase issu de la sortie 17 de la cellule 16. L'autre signal issu du coupleur 12 est transposé, dans un mélangeur 30 en bande de base en quadrature par multiplication avec le signal d'horloge en quadrature issu de la sortie 18 de la cellule 16.

Les signaux issus des mélangeurs 20, 30, sont appliqués à des filtres passe-bas respectifs 22, 32. On obtient ainsi à la sortie des deux filtres 22, 32, les deux composantes, en phase et en quadrature, représentatives du signal reçu. Ces composantes sont appliquées à des amplificateurs respectifs 24, 34, puis à des convertisseurs analogique/numérique respectifs 26, 36. On obtient ainsi à la sortie des convertisseurs analogique/numérique 26, 36 respectivement des échantillons $Y_{p,k}$ et $Y_{q,k}$ (p désignant les échantillons des composantes en phase, q désignant les échantillons des composantes en quadrature et k désignant le rang des échantillons).

Les fonctions de synchronisation et de prise de décision sont ensuite réalisées par un traitement numérique spécifique de la modulation dans une unité portant la référence générale 40 sur la figure 1.

Les demandeurs ont constaté que la partie analogique du démodulateur qui précède le traitement numérique est affectée de plusieurs défauts :

– régulation de niveau imparfaite se traduisant par une variation du niveau des échantillons en fonction des fluctuations du signal reçu,

– deséquilibre d'amplitude entre les deux voies dû à des gains différents,

– décalage des tensions de repos sur chaque voie, dans les amplificateurs 24, 34 et les convertisseurs analogique/numérique 26, 36,

– défaut de quadrature entre les deux voies démodulées.

Ces défauts dépendent par ailleurs de la fréquence de fonctionnement et de la température. Ils sont donc difficiles à compenser par les techniques connues. Ils entraînent une dégradation des performances du démodulateur (augmentation du taux d'erreur binaire).

Les performances d'une liaison numérique s'évaluent généralement par la courbe de taux d'erreur sur les bits (TEB) en fonction du rapport Eb/No (Eb = énergie dépensée pour transmettre un bit, No : densité de puissance du bruit sur la liaison).

L'existence de défauts dans le démodulateur se traduit par la nécessité d'augmenter le rapport Eb/No d'une quantité $\Delta$ Eb/No pour obtenir le même taux d'erreur qu'en l'absence de défauts. Les exemples suivants sont destinés à illustrer ce phénomène.

En MDP2 (modulation par déplacement de phase à 2 états) avec décalage de tension sur une voie, ou en MDP4 (modulation par déplacement de phase à 4 états) avec décalages identiques sur les deux voies, la dégradation du rapport Eb/No aux faibles taux d'erreur (TEB < $10^{-6}$) vaut :

$\Delta$Eb/No = 0,3 dB pour un décalage de 5 % du signal utile,

$\Delta$Eb/No = 0,7 dB pour un décalage de 10 % du signal utile.

En MDP4 avec erreur de quadrature $\Delta\theta$ entre les deux voies on peut assimiler la dégradation à celle résultant d'une erreur de récupération de porteuse égale à $\Delta\theta/2$, soit

$\Delta$Eb/No = 0,4 dB pour $\Delta\theta$ = 5 degrés,

$\Delta$Eb/No = 0,8 dB pour $\Delta\theta$ = 10 degrés.

Le document US-A-4574244 décrit un démodulateur sensiblement conforme au démodulateur connu précédemment décrit en regard de la figure I annexée. Toutefois, pour tenir compte du défaut de quadrature entre les deux signaux issus de l'oscillateur local, ce document propose de générer un signal déerreur formé par des bits les moins significatifs du signal numérique issu de chaque voie et d'utiliser ces signaux d'erreur pour corriger le défaut de quadrature par correction d'offset de phases et rebouclages.

La présente invention a maintenant pour but de proposer un dispositif permettant d'estimer et de corriger, de façon dynamique, numériquement les défauts exposés précédemment de la partie analogique du démodulateur, sans nécessiter de signal de test et sans perturber la liaison en fonctionnement pour améliorer les per-

2

formances de la transmission.

Ces buts sont atteints selon la présente invention grâce à un démodulateur pour transmission numérique utilisant les techniques de transposition du signal en bande de base, du type connu en soi, comprenant des moyens pour séparer un signal HF reçu en deux signaux auxiliaires identique, un premier mélangeur pour transposer un premier signal auxiliaire en composante de base en phase par multiplication avec le signal de sortie d'un oscillateur local, un second mélangeur pour transposer le second signal auxiliaire en composante en quadrature par multiplication du second signal auxiliaire avec le signal de sortie de l'oscillateur local déphasé de 90°, des moyens de filtrage et d'amplification et des convertisseurs analogique/numérique connectés respectivement à la sortie de chacun des mélangeurs, caractérisé par le fait qu'il comprend en outre des moyens d'estimation adaptés pour estimer les défauts sur des groupes d'échantillons prélevés à la sortie des convertisseurs analogique/numérique, sous forme de cinq paramètres comprenant : le gain correctif à introduire sur la voie en phase, le gain correctif à introduire sur la voie en quadrature, le décalage de tension sur la voie en phase, le décalage de tension sur la voie en quadrature et l'erreur de phase par rapport à la quadrature, et des moyens pour corriger les échantillons en cours sur la base des paramètres estimés sur un groupe d'échantillons antérieurs.

D'autres caractéristiques, buts et avantages de la présente invention apparaîtront à la lecture de la description détaillée qui va suivre, et en regard des dessins annexés, donnés à titre d'exemple non limitatif, sur lesquels :

– la figure 1 représente une vue schématique sous forme de blocs fonctionnels d'un démodulateur classique de la technique antérieure,

– la figure 2 représente une vue schématique sous forme de blocs fonctionnels d'un démodulateur conforme à la présente invention,

– la figure 3 représente un organigramme du traitement effectué dans les moyens estimant les défauts sous forme de 5 paramètres,

– la figure 4 représente une vue schématique sous forme de blocs fonctionnels des moyens de correction, et

– les figures 5, 6, 7 et 8 représentent des vues schématiques de quatre sous-ensembles des moyens de correction.

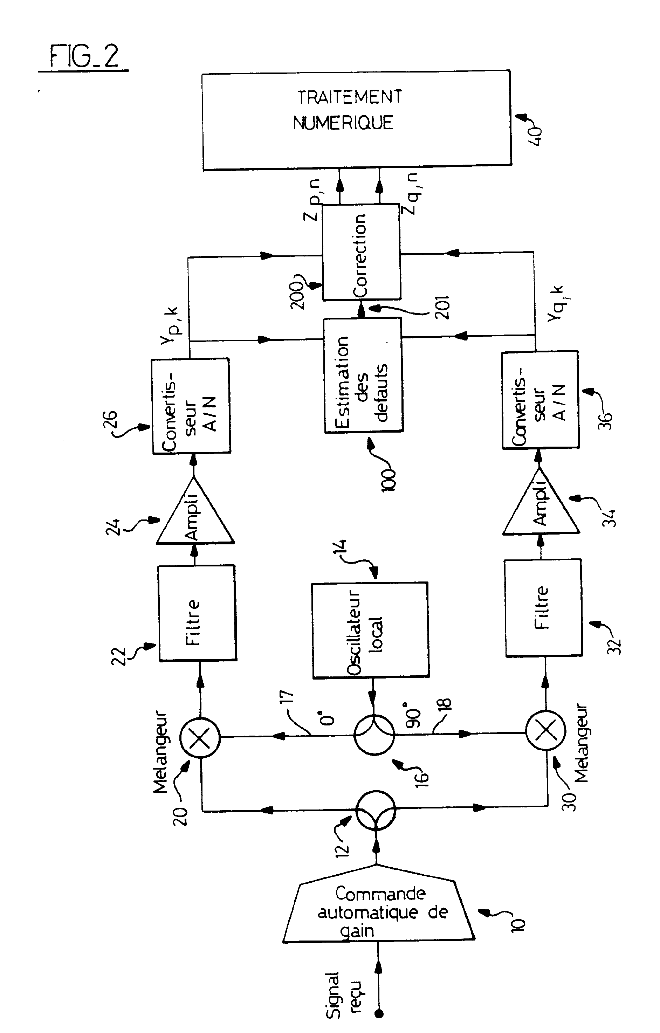

On aperçoit sur la figure 2 annexée un circuit à commande automatique de gain 10, un coupleur 12, un oscillateur local 14, une cellule 16, deux mélangeurs 20, 30, deux filtres 22, 32, deux amplificateurs 24, 24, deux convertisseurs analogique/numérique 26, 36 et une unité de traitement numérique 40 conformes aux dispositions représentées sur la figure 1 précédemment décrite.

En outre, on aperçoit sur la figure 2 des moyens d'estimation de défauts 100 et des moyens de correction 200 insérés entre la sortie des convertisseurs analogique/numérique 26, 36, et l'entrée du circuit de synchronisation et de prise de décision 40.

Comme évoqué précédemment, les moyens d'estimation de défauts 100 estiment la valeur des défauts sous forme de 5 parametres, à partir d'une suite d'échantillons $Y_{p,k}$, et $Y_{q,k}$. Ensuite, les moyens de correction 200 reconstituent des échantillons corrigés $Z_{p,n}$ et $Z_{q,n}$ à partir des échantillons en cours $Y_{p,n}$ et $Y_{q,n}$.

L'estimation du paramètre a correspondant au décalage de tension sur la voie en phase s'obtient par moyenne des échantillons $Y_{p,k}$ :

$$(1) \qquad a = \frac{1}{N} \sum_{k=1}^{N} Y_{p,k}$$

L'estimation du paramètre b correspondant au décalage de tension sur la voie en quadrature s'obtient de même par moyenne des échantillons $Y_{q,k}$ :

$$(2) \qquad b = \frac{1}{N} \sum_{k=1}^{N} Y_{q,k}$$

Le choix du nombre N d'échantillons pris en compte dans le calcul dépend du niveau de bruit sur la liaison et de la précision désirée.

Si on ne désire pas assurer de régulation complémentaire de niveau des échantillons corrigés $Z_{p,n}$ et $Z_{q,n}$ il n'est pas nécessaire d'évaluer les paramètres $\alpha$ et $\beta$ correspondant respectivement au gain correctif à introduire sur la voie en phase et au gain correctif à introduire sur la voie en quadrature, mais il suffit d'évaluer le rapport $\alpha/\beta$. On fixe alors arbitrairement la valeur de $\alpha$ (ou de $\beta$) et il y a un paramètre de moins à estimer.

L'estimation du rapport $\alpha/\beta$ s'obtient par moyenne des carrés des différences $Y_{p,k}$ - a et $Y_{q,k}$ - b :

$$(3) \quad \alpha/\beta = \sqrt{\sum_{k=1}^{N} (Y_{q,k} - b)^2} \Big/ \sqrt{\sum_{k=1}^{N} (Y_{p,k} - a)^2}$$

Pour estimer individuellement $\alpha$ et $\beta$, ainsi que le paramètre qui représente l'erreur de phase par rapport à la quadrature, il faut en outre calculer la moyenne des produits des différences $Y_{p,k}$ - a et $Y_{q,k}$ - b.

Les paramètres $\alpha$ et $\beta$ sont obtenus sur la base des relations suivantes :

$$(4) \quad \alpha = \frac{\sigma \sqrt{N} \sqrt{\sum_{k=1}^{N} (Y_{q,k} - b)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

$$(5) \quad \beta = \frac{\sigma \sqrt{N} \sqrt{\sum_{k=1}^{N} (Y_{p,k} - a)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

Dans les relations ci-dessus $\sigma^2$ représente la valeur de consigne pour la moyenne des carrés des échantillons corrigés. Le paramètre $\Delta\theta$ peut être obtenu sous la forme :

$$(6) \quad \sin \Delta\theta = -\sum_{k=1}^{N} (Y_{p,k} - a)(Y_{q,k} - b) \Big/ \sqrt{\sum_{k=1}^{N} (Y_{p,k} - a)^2 \sum_{k=1}^{N} (Y_{q,k} - b)^2}$$

Compte tenu de la lenteur des variations des paramètres à estimer, les moyens d'estimation 100 peuvent fonctionner à une vitesse. faible par rapport au rythme de sortie des échantillons $Y_{p,k}$ et $Y_{q,k}$. Il suffit de répéter périodiquement l'estimation sur un block de N échantillons qui ne sont d'ailleurs pas nécessairement immédiatement consécutifs.

Les moyens de correction 200 déterminent ensuite les échantillons corrigés selon les expressions :

$$(7) \quad Z_{p,n} = \alpha (Y_{p,n} - a) + \beta (Y_{q,n} - b). \sin \Delta\theta$$
$$(8) \quad Z_{q,n} = \beta (Y_{q,n} - b) \cos \Delta\theta$$

Si, comme indiqué précédemment, les moyens d'estimation 100 peuvent fonctionner à une vitesse relativement faible par rapport au rythme des échantillons, en revanche les moyens de correction 200 doivent impérativement fonctionner au rythme des échantillons $Y_{p,n}$ et $Y_{q,n}$ issus des convertisseurs numérique/analogique 26, 36.

L'estimation des défauts sous forme de 5 paramètres a, b, $\alpha$, $\beta$ $\Delta\theta$ dans les moyens 100 pouvant se faire à faible vitesse et nécessitant plusieurs étapes de calcul, il semble actuellement avantageux de réaliser les moyens d'estimation 100 à l'aide d'un microprocesseur.

En revanche, la correction à réaliser dans les moyens 200 devant se faire à vitesse rapide (jusqu'à 6M échantillons/s) les moyens de correction 200 sont de préférence réalisés en logique câblée.

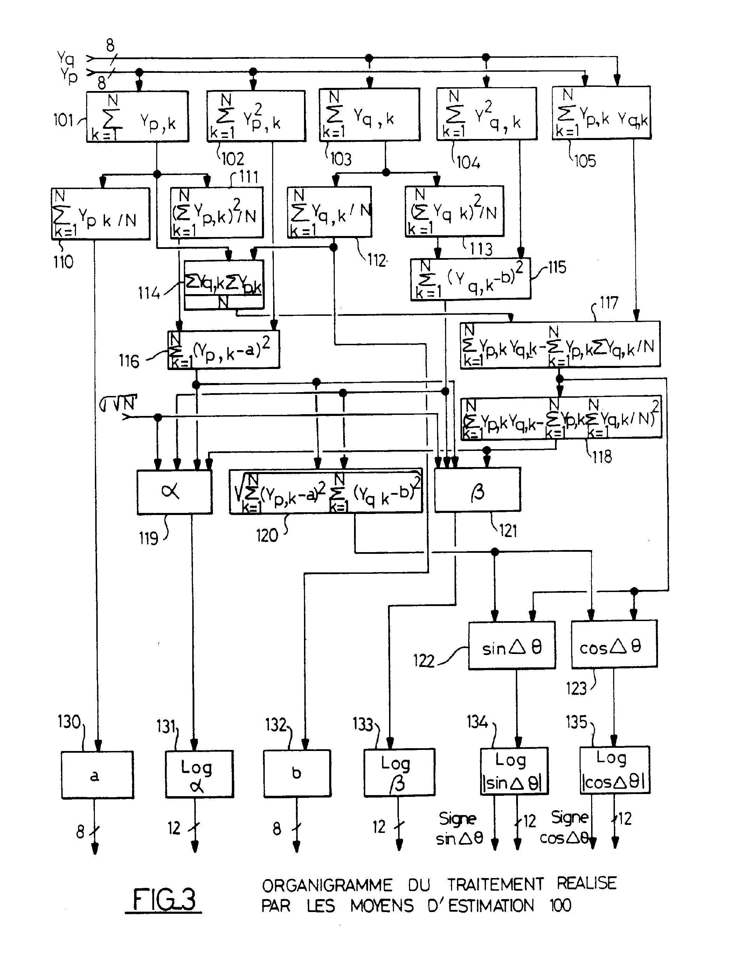

L'organigramme du traitement d'estimation des défauts a, b, $\alpha$, $\beta$, $\Delta\theta$ effectué par les moyens 100 est représenté sur la figure 3 annexée.

On peut décomposer l'organigramme illustré sur la figure 3 annexée en deux phases distinctes : un calcul courant correspondant essentiellement aux étapes 101 à 105 et un calcul final qui correspond aux étapes 110 à 123 et aux étapes 130 à 135.

Dans la phase correspondant au calcul courant, les moyens 100 prélèvent N échantillons successifs $Y_{p,k}$ et $Y_{q,k}$ des signaux d'entrée, codés par exemple sur 8 bits, et calculent les sommes :

$$(9) \quad \sum_{k=1}^{N} Y_{p,k}$$

(étape 101)

$$(10) \quad \sum_{k=1}^{N} Y^2_{p,k}$$

(étape 102)

$$(11) \quad \sum_{k=1}^{N} Y_{q,k}$$

(étape 103)

$$(12) \quad \sum_{k=1}^{N} Y^2_{q,k}$$

(étape 104)

$$(13) \quad \sum_{k=1}^{N} Y_{p,k} Y_{q,k}$$

(étape 105).

Lorsqu'un bloc de N échantillons $Y_{p,k}$ et $Y_{q,k}$ a été pris en compte pour calculer les sommes précédentes, les moyens 100 calculent les termes suivants :

$$(14) \quad \sum_{k=1}^{N} Y_{p,k}/N$$

(étape 110, utilisant le résultat de l'étape 101)

$$(15) \quad (\sum_{k=1}^{N} Y_{p,k})^2/N$$

(étape 111, utilisant le résultat de l'étape 101).

$$(16) \qquad \sum_{k=1}^{N} Y_{q,k}/N$$

(étape 112, utilisant le résultat de l'étape 103)

$$(17) \qquad ( \sum_{k=1}^{N} Y_{q,k})^2/N$$

(étape 113, utilisant le résultat de l'étape 103)

$$(18) \qquad \frac{\sum_{k=1}^{N} Y_{q,k} \; \sum_{k=1}^{N} Y_{p,k}}{N}$$

(étape 114, utilisant le résultat des étapes 101 et 112)

$$(19) \qquad \sum_{k=1}^{N} (Y_{q,k} - b)^2$$

(étape 115, utilisant le résultat des étapes 104 et 113)

$$(20) \qquad \sum_{k=1}^{N} (Y_{p,k} - a)^2$$

(étape 116 utilisant le résultat des étapes 102 et 111)

$$(21) \qquad \sum_{k=1}^{N} Y_{p,k} Y_{q,k} - \sum_{k=1}^{N} Y_{p,k} \; \sum_{k=1}^{N} Y_{q,k}/N$$

(étape 117 utilisant le résultat des étapes 114 et 105)

$$(22) \qquad ( \sum_{k=1}^{N} Y_{p,k} Y_{q,k} - \sum_{k=1}^{N} Y_{p,k} \; \sum_{k=1}^{N} Y_{q,k}/N)^2$$

(étape 118 utilisant le résultat de l'étape 117)

$$(23) \qquad \text{valeur de } \alpha$$

(étape 119 utilisant les résultats des étapes 115, 116 et 118 et la valeur de $\sigma \sqrt{N}$)

$$(24) \quad \sum_{k=1}^{N} (Y_{p,k} - a)^2 \quad \sum_{k=1}^{N} (Y_{q,k} - b)^2$$

(étape 120 utilisant le résultat des étapes 115, 116)

$$(25) \qquad \text{valeur de } \beta$$

(étape 121 utilisant les résultats des étapes 115, 116 et 118 et la valeur de $\sigma \sqrt{N}$)

$$(26) \qquad \sin \Delta\theta$$

(étape 122 utilisant le résultat des étapes 117 et 120)

$$(27) \cos \Delta\theta$$

(étape 123 utilisant le résultat des étapes 117 et 120).

Afin de simplifier les opérations de correction ultérieures dans les moyens 200, les moyens 100 fournissent non pas $\alpha$, $\beta$, $\sin \Delta\theta$ et $\cos\Delta\theta$, mais les logarithmes à base 2 : $\text{Log } \alpha$, $\text{Log } \beta$, $\text{Log } |\sin \Delta\theta|$, $\text{Log } |\cos\Delta\theta|$ et les signes de $\sin \Delta\theta$, $\cos \Delta\theta$.

Sur la figure 3 on a illustré :

– à l'étape 130, l'obtention du paramètre a, par exemple sur 8 bits, après l'étape 110,

– à l'étape 131, l'obtention du paramètre $\text{Log } \alpha$, par exemple sur 12 bits, après l'étape 119,

– à l'étape 132, l'obtention du paramètre b, par exemple sur 8 bits, après l'étape 112,

– à l'étape 133, l'obtention du paramètre $\text{Log } \beta$, par exemple sur 12 bits, après l'étape 121,

– à l'étape 134, l'obtention du paramètre $\text{Log } |\sin\Delta\theta|$, par exemple sur 12 bits et le signe de $\sin \Delta\theta$ après l'étape 122, et

– à l'étape 135, l'obtention du paramètre $\text{Log } |\cos\Delta\theta|$, par exemple sur 12 bits et le signe de $\cos \Delta\theta$, après l'étape 123.

Selon une mise en oeuvre avantageuse, les logarithmes sont présentés sur 12 bits, dont 8 bits pour la mantisse et 4 bits pour la partie entière et le signe.

Les paramètres $\sigma$ et N sont programmables. Ils peuvent avoir pour valeur typique : $\sigma = 64$ et N = 4096.

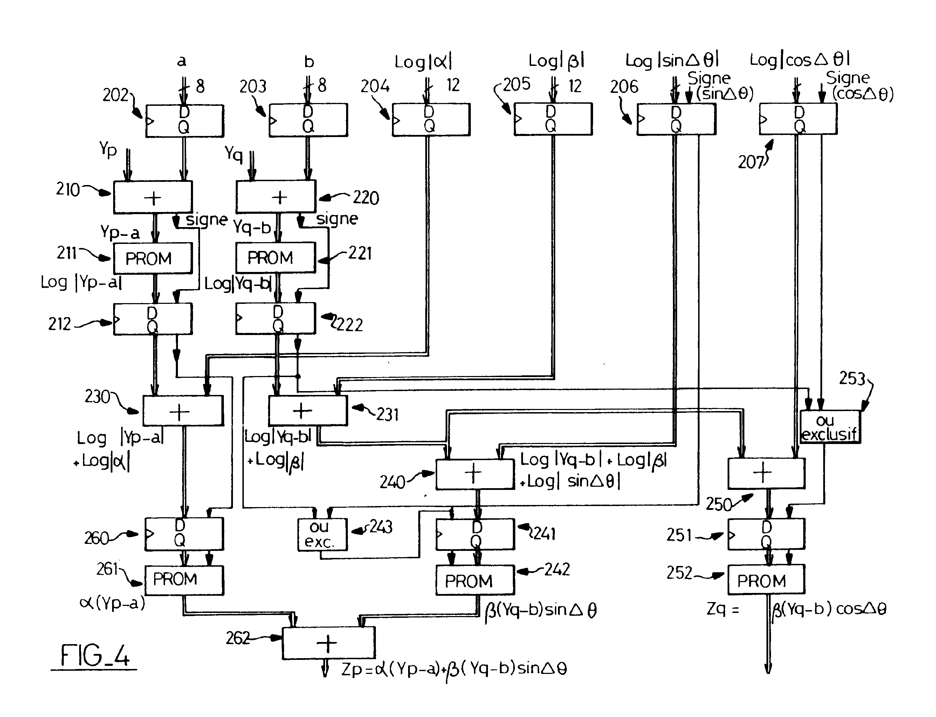

Le schéma synoptique des moyens de correction 200 est donné sur la figure 4. Ces moyens calculent les échantillons corrigés $Z_p$, $Z_q$ en fonction des échantillons $Y_p$ et $Y_q$ et des paramètres correctifs estimés a, b, $\text{Log}|\alpha|$, $\text{Log}|\beta|$, $\text{Log}|\sin\Delta\theta|$ et $\text{Log}|\cos\Delta\theta|$, sur la base des relations (7) et (8) précitées.

Afin de simplifier la structure des moyens 200 les produits sont calculés par l'intermédiaire des logarithmes, ce qui évite les multiplications et les remplace par des additions. Les signes éventuels sont représentés par un bit séparé traité à part.

Le passage d'un nombre à son logarithme et l'opération inverse sont accomplis par lecture de mémoires PROM.

Les additions sont effectuées par des unités arithmétiques et logiques spécialisées.

Comme illustré sur la figure 4, afin de synchroniser les signaux et d'éviter les aléas, les paramètres a, b, $\text{Log}|\alpha|$, $\text{Log}|\beta|$, $\text{Log}|\sin\Delta\theta|$ et $\text{Log}|\cos\Delta\theta|$ sont appliqués à des ensembles de bascules 202, 203, 204, 205, 206, et 207 respectifs.

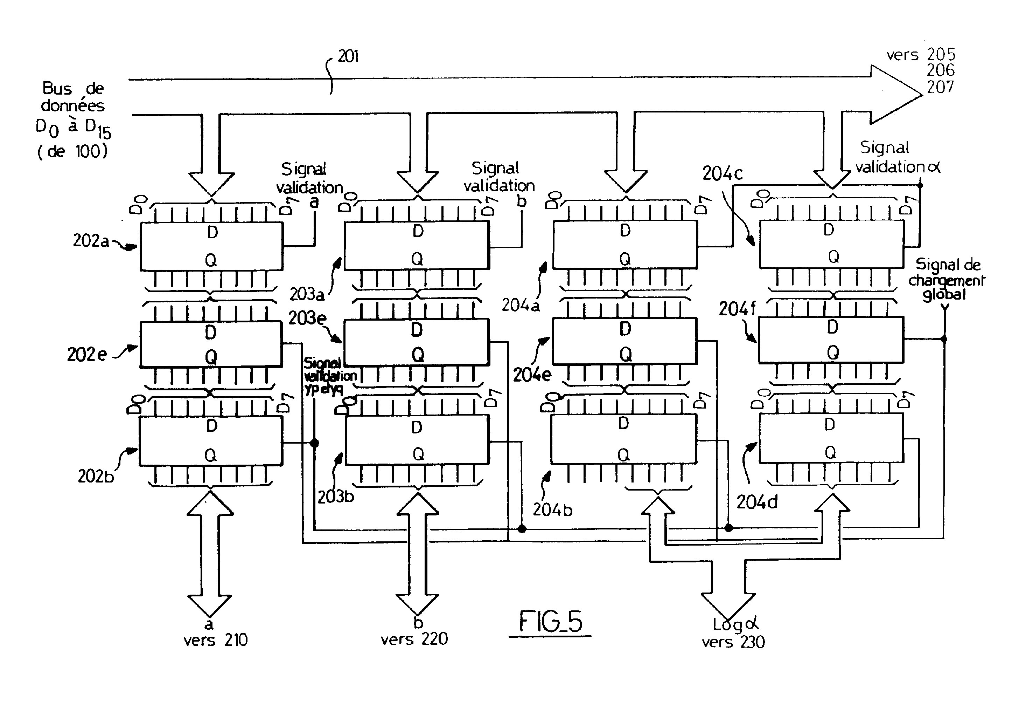

Plus précisément encore, comme illustré en détail sur la figure 5, pour les paramètres a, b et $\text{Log}|\alpha|$, chaque ensemble de bascules comprend un jeu de bascules d'entrée et deux jeux de bascules de relecture.

On aperçoit ainsi sur la figure 5 un jeu de bascules d'entrée 202a pour le paramètre a, un jeu de bascules d'entrée 203a pour le paramètre b et des jeux de bascules d'entrée 204a et 204c pour le paramètre $\text{Log}| \ |$ ; ces jeux de bascules d'entrée ont leurs entrées connectées à un bus de données 201.

Le chargement du jeu de bascules d'entrée 202a est opéré lors de l'apparition d'un signal de validation a.

De façon similaire le chargement du jeu de bascules d'entrée 203a est opéré lors de l'apparition d'un signal de validation b.

Enfin, le chargement des jeux de bascules d'entrée 204a et 204c est opéré lors de l'apparition d'un signal de validation $\alpha$.

Des jeux de bascules 202e, 203e, 204e, 204f sont reliés respectivement aux sorties des jeux de bascules d'entrée 202a, 203a, 204a et 204c.

Les bascules de relecture 202e, 203e, 204e, 204f sont chargées à la valeur contenue dans les jeux de bascules 202a, 203a, 204a, 204c lors de l'apparition du signal de chargement global.

Des jeux de bascules de relecture 202b, 203b, 204b, 204d, sont reliés respectivement aux sorties des jeux de bascules 202e, 203e, 204e et 204f.

Les bascules de relecture 202b, 203b, 204b, 204d, sont chargées à la valeur contenue dans les jeux de bascules 202a, 203a, 204a et 204c lors de l'apparition d'un signal de validation des échantillons $Y_p$ et $Y_q$.

Le paramètre a est disponible à la sortie du jeu de bascules de relecture 202b. Le paramètre b est disponible à la sortie du jeu de bascules de relecture 203b. Le paramètre $Log|\alpha|$ est disponible à la sortie des jeux de bascules de relecture 204b et 204d.

La lecture des paramètres $Log|\beta|$, $Log|\sin\Delta\theta|$ et $Log|\cos\Delta\theta|$, et des signes de $\sin\Delta\theta$ et $\cos\Delta\theta$ se fait de façon similaire dans les jeux de bascules 205, 206 et 207.

Un ensemble additionneur 210 reçoit sur ses entrées les échantillons $Y_p$ et le paramètre a issu des bascules 202. Il génère à sa sortie la différence $|Y_p - a|$, ainsi qu'un signal représentant le signe de la différence.

De façon similaire un ensemble additionneur 220 reçoit sur ses entrées les échantillons $Y_q$ et le paramètre b issu des bascules 203. Il génère à sa sortie la différence $|Y_q - b|$ ainsi qu'un signal représentant le signe de la différence.

Le signal représentant la différence $|Y_p - a|$ issu de l'ensemble additionneur 210 est appliqué à l'entrée d'une mémoire PROM 211. Celle-ci génère à sa sortie un signal représentant le logarithme $Log|Y_p - a|$. Le signal $Log|Y_p - a|$ est appliqué à un jeu de bascules de synchronisation 212. Celle-ci reçoit aussi le signal de signe issu de l'ensemble additionneur 210.

De façon similaire, le signal de différence $|Y_q - b|$ issu de l'ensemble additionneur 220 est appliqué à l'entrée d'une mémoire PROM 221. Celle-ci génère à sa sortie le logarithme $Log|Yq - b|$. Le logarithme $Log|Y_q - b|$ est appliqué à l'entrée d'un jeu de bascules de synchronisation 222. Celui-ci reçoit également le signal de signe issu de l'ensemble additionneur 220.

Un ensemble additionneur 230 reçoit sur ses entrées, d'une part, le signal $Log|Y_p - a|$ issu des bascules 212, d'autre part, le signal $Log|\alpha|$ issu des bascules 204. Il génère à sa sortie le signal $Log|Y_p - a| + Log|\alpha|$.

De façon similaire un ensemble additionneur 231 reçoit sur ses entrées, d'une part, le signal $Log|Y_q - b|$ issu des bascules 222 et, d'autre part, le signal $Log|\beta|$ issu des bascules 205. Il génère à sa sortie le signal $Log|Y_q - b| + Log|\beta|$.

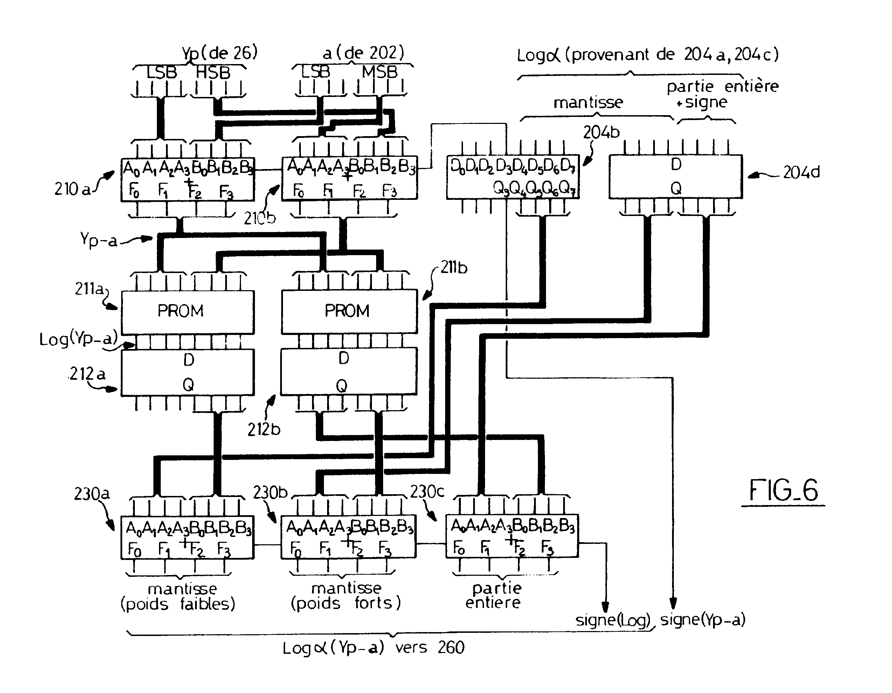

On a illustré sur la figure 6 annexée, le détail d'un exemple de réalisation de l'ensemble additionneur 210 de la mémoire PROM 211 des bascules 212 et de l'ensemble additionneur 230.

La même structure est utilisée pour calculer sous forme de signe et de logarithme le produit $Log|Y_q - b| + Log|\beta|$ dans l'ensemble additionneur 220, la mémoire PROM 221, les bascules 222 et l'ensemble additionneur 231.

Selon la représentation donnée sur la figure 6 annexée, l'ensemble additionneur 210 est formé de deux boîtiers d'additionneurs à 4 bits 210a, 210b, par exemple du type 74F181, montés en cascade. le boîtier 210a reçoit sur ses entrées Ao à A3, les 4 bits de poids faible des échantillons $Y_p$. Le boîtier 210a reçoit sur ses entrées Bo, B1, B2 et B3 les 4 bits de poids faible du paramètre a issu des bascules 202. Le boîtier 210b reçoit sur ses entrées Ao à A3 les 4 bits de poids fort du paramètre a et sur ses entrées Bo à B3 les 4 bits de poids fort des échantillons $Y_p$.

La mémoire PROM 211 est formée de deux boîtiers 211a, 211b, de mémoire PROM à 8 bits, par exemple du type 82S135 (PROM 256 x 8).

Le boîtier 211a reçoit sur ses entrées Ao à A3 les 4 bits issus du boîtier additionneur 210a et sur ses entrées A4 à A7 les 4 bits issus du boîtier d'additionneur 210b.

De façon similaire le boîtier 211b reçoit sur ses entrées Ao à A3 les 4 bits issus du boîtier d'additionneur 210a et sur ses entrées A4 à A7 les 4 bits issus du boîtier d'additionneur 210b.

Le jeu de bascules 212 est formé de deux boîtiers 212a, 212b, de 8 bascules, par exemple du type 74F374. Les entrées des boîtiers 212a, 212b, sont reliées aux sorties des boîtiers PROM 211a et 211b respectivement.

L'ensemble additionneur 230 est formé de trois boîtiers d'additionneurs à 4 bits 230a, 230b, 230c, par exemple du type 74F181.

Le boîtier 230a reçoit sur ses entrées Ao à A3 les 4 bits de poids faible de la mantisse du $Log(\alpha)$ issus du jeu de bascules de relecture 204b, et sur ses entrées Bo à B3 les 4 bits de mantisse issus des bascules 212a.

Le boîtier 230b reçoit sur ses entrées Ao à A3 les 4 bits de poids fort de la mantisse du $Log(\alpha)$ issus du jeu de bascules de relecture 204d, et sur ses entrées Bo à B3 les 4 bits de mantisse de poids fort issus du jeu de bascules 212b.

Le boîtier 230c reçoit sur ses entrées Ao à A3 les 4 bits de partie entière et de signe de $Log(\alpha)$ issus du jeu de bascules de relecture 204d, et sur ses entrées Bo à B3 les 4 bits de partie entière et de signe issus du jeu de bascules 212b.

Le signe de $Y_{p-a}$ qui est identique au signe du produit $\alpha (Y_{p-a})$ est sorti séparément. Il est prélevé à la sortie du boîtier d'additionneur 210b et transite de préférence par un étage du jeu de bascules de relecture 204b.

Un ensemble additionneur 240 reçoit sur ses entrées, d'une part, le signal $Log|Y_q - b| + Log|\beta|$ issu de l'ensemble additionneur 231, d'autre part, le signal $Log|\sin\Delta\theta|$ issu de l'ensemble de bascules 206. Il génère à sa sortie le signal $Log|Y_q - b| + Log|\beta| + Log|\sin\Delta\theta|$. Ce signal ainsi que le bit de signe issu d'une porte OU exclusive 243 est appliqué à un ensemble de bascules 241 dont la sortie est appliquée à une mémoire PROM 242 qui effectue la fonction inverse du passage au logarithme. Le signal $\beta (Y_q - b)\sin(\Delta\theta)$ est par conséquent disponible à la sortie de la mémoire PROM 242.

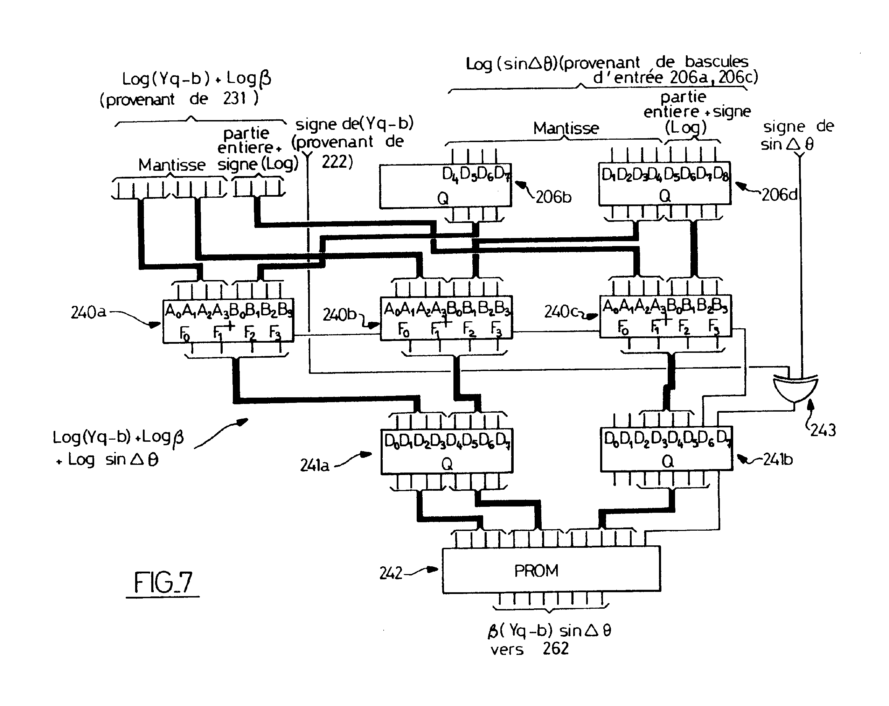

On a illustré schématiquement sur la figure 7 annexée un exemple de réalisation de l'ensemble additionneur 240, de l'ensemble de bascules 241 et de la mémoire PROM 242.

Selon la représentation donnée sur la figure 7, l'ensemble additionneur 240 est formé de 3 boîtiers d'additionneur à 4 bits 240a, 240b, 240c. Le boîtier 240a reçoit sur ses entrées Ao à A3 les 4 bits de poids faible de la mantisse du signal $\text{Log}|Y_q - b| + \text{Log}|\beta|$ issus de l'ensemble additionneur 231 et sur ses entrées Bo à B3 les 4 bits de poids faible de la mantisse du signal $\text{Log}|\sin\Delta\theta|$ issus de l'ensemble de bascules 206.

Le boîtier d'additionneur 240b reçoit sur ses entrées Ao à A3 les 4 bits de poids fort de la mantisse du signal issu de l'ensemble additionneur 231 et sur ses entrées Bo à B3 les 4 bits de poids fort de la mantisse du signal issu des bascules 206.

Le boîtier d'additionneur 240c reçoit sur ses entrées Ao à A3 les 4 bits de partie entière et de signe du signal issu de l'ensemble additionneur 231 et sur ses entrées Bo à B3 les 4 bits de partie entière et de signe du signal issu des bascules 206.

Les boîtiers d'additionneur 240a, 240b, 240c peuvent être par exemple du type 74F181.

L'ensemble de bascules 241 est formé de deux boîtiers de 8 bascules 241a, 241b, par exemple du type 74F374.

Le boîtier 241a reçoit sur ses entrées D0 à D3 les 4 bits issus du boîtier d'additionneur 240a, et sur ses entrées D4 à D7 les 4 bits issus du boîtier d'additionneur 240b. Le boîtier 241b reçoit sur ses entrées D2 à D5 les 4 bits issus du boîtier d'additionneur 240c, sur son entrée D6 le signal de retenue issu du boîtier d'additionneur 240c et sur son entrée D7 le signal issu d'une porte OU exclusive 243, par exemple du type 74F86. Cette porte OU exclusive reçoit sur ses entrées, d'une part, le signal de signe de $Y_q - b$, d'autre part, le signal de signe de $\text{Sin } \Delta\theta$.

La mémoire 242 PROM, selon la représentation sur la figure 6 est formée d'un boîtier à 14 entrées d'adresse et 8 sorties, par exemple du type 82HS1281. Les 8 entrées de poids faible de la mémoire PROM 242 sont reliées aux sorties du boîtier 241a. Les 6 entrées de poids fort du boîtier de mémoire 242 sont reliées aux sorties de poids fort du boîtier de bascule 241b.

Le produit $\beta (Y_q - b)\cos\Delta\theta$ est obtenu à l'aide d'un ensemble additionneur 250, d'un ensemble de bascules 251, d'une mémoire PROM 252 et d'un OU exclusif 253 en tout point similaire à l'ensemble additionneur 240, aux bascules 241, à la mémoire PROM 252 et au OU exclusif 243.

L'ensemble additionneur 250 reçoit en effet sur ses entrées, d'une part, le signal issu de l'ensemble additionneur 231, d'autre part, le signal issu des bascules 207. Les sorties de l'ensemble additionneur 250 sont reliées aux entrées des bascules 251. Les sorties de ces dernières sont reliées aux entrées de la mémoire PROM 252.

Le OU exclusif 253 reçoit sur ses entrées, d'une part, le signal de signe de $Y_q - b$, d'autre part, le signal de signe de $\cos\Delta\theta$ issu des bascules 207. Les échantillons corrigés $Z_q$ sont disponibles à la sortie de la mémoire PROM 252.

Les entrées d'un ensemble de bascule 260 reçoivent les sorties de l'ensemble additionneur 230 et le signal de signe $Y_p - a$ issu des bascules 212. Les sorties des bascules 260 sont reliées aux entrées d'adresse d'une mémoire PROM 261. Celle-ci a pour fonction d'effectuer la conversion inverse du passage au logarithme sur le signal $\text{Log}|Y_p - a| + \text{Log}|\alpha|$. Ainsi, le signal $\alpha (Y_p - a)$ est disponible à la sortie de la PROM 261.

Le calcul final de $Z_p$ est opéré dans un ensemble additionneur 262 qui reçoit sur ses entrées, d'une part, la sortie de la mémoire PROM 261, d'autre part, la sortie de la mémoire PROM 242.

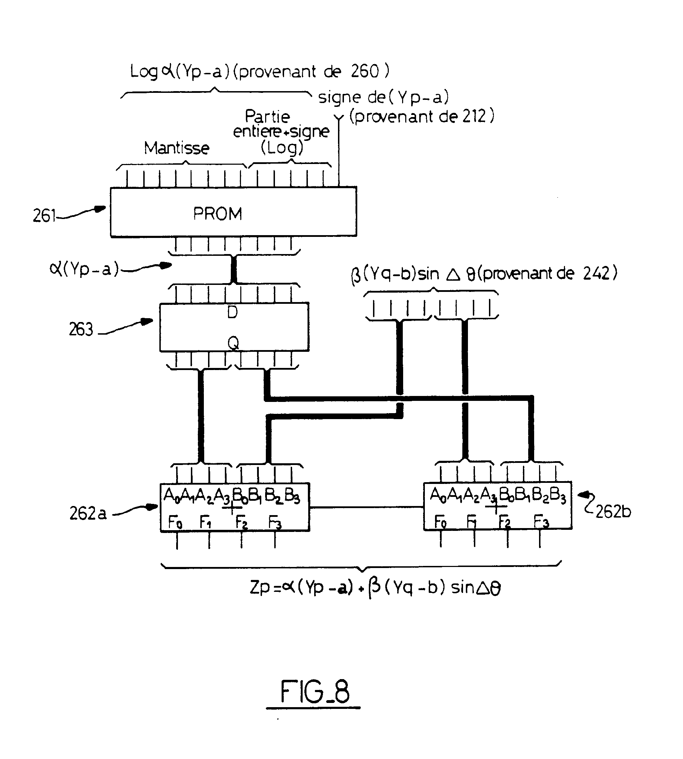

On a représenté sur la figure 8 annexée un exemple de réalisation de la mémoire PROM 261 et de l'additionneur 262.

Selon la représentation donnée sur la figure 7, la mémoire PROM 261 est formée d'un boîtier à 14 entrées d'adresse et 8 bits de sortie, par exemple du type 82HS1281. De préférence, les sorties de la mémoire PROM 261 sont reliées à un jeu de bascules intermédiaires 263.

L'ensemble additionneur 262, selon la représentation donnée sur la figure 7 comprend deux boîtiers d'additionneur à 4 bits 262a, 262b, par exemple du type 74F181.

Le boîtier 262a reçoit sur ses entrées A0 à A3 les 4 bits de poids faible issus du boîtier 263 et sur ses entrées B0 à B3 les 4 bits de poids faible du signal issu de la mémoire PROM 242.

Le boîtier d'additionneur 262b reçoit sur ses entrées A0 à A3 Les 4 bits de poids fort du signal issu de la mémoire PROM 242, et sur ses entrées B0 à B3 les 4 bits de poids fort issus du jeu de bascules 263.

La présente invention offre notamment les avantages suivants.

Elle permet d'estimer et de corriger en dynamique les défauts de la partie analogique du démodulateur.

Elle permet également de réguler le niveau du signal traité La réalisation numérique facilite son insertion dans les démodulateurs à traitement numérique du signal.

La dispositif proposé par la présente invention peut être utilisé sur une liaison numérique en fonctionnement, sans modification de celle-ci.

## Revendications

1. Démodulateur pour transmission numérique utilisant les techniques de transposition du signal en bande de base comprenant des moyens (12) pour séparer un signal HF reçu en deux signaux auxiliaires identiques, un premier mélangeur (20) pour transposer un premier signal auxiliaire en composant de base en phase par multiplication avec le signal de sortie d'un oscillateur local (14), un second mélangeur (30) pour transposer le second signal auxiliaire en composante en quadrature par multiplication du second signal auxiliaire avec le signal de sortie de l'oscillateur local (14) déphasé de 90°, des moyens de filtrage et d'amplification (22, 24 : 32, 34) et des convertisseurs analogique/numérique (26, 36) connectés respectivement à la sortie de chacun des mélangeurs (20, 30), caractérisé par le fait qu'il comprend en outre :
   – des moyens d'estimation (100) adaptés pour estimer les défauts sur des groupes d'échantillons ($Y_{p,k}$, $Y_{q,k}$) prélevés à la sortie des convertisseurs analogique/numérique (26, 36), sous forme de cinq paramètres comprenant : le gain correctif à introduire sur la voie en phase ($\alpha$), le gain correctif à introduire sur la voie en quadrature ($\beta$), le décalage de tension sur la voie en phase (a), le décalage de tension sur la voie en quadrature (b) et l'erreur de phase ($\Delta\theta$) par rapport à la quadrature, et
   – des moyens (200) pour corriger les échantillons ($Y_p$, $y_q$) en cours sur la base des paramètres estimés sur un groupe d'échantillons antérieurs.

2. Démodulateur selon la revendication 1, caractérisé par le fait que les échantillons corrigés ($Z_p$,n) et ($Z_{q,n}$) sont établis sur la base des expressions suivantes :
$$(7) \qquad Z_{p,n} = \alpha (Y_{p,n} - a) + \beta (Y_{q,n} - b) . \sin \Delta\theta$$
$$(8) \qquad Z_{q,n} = \beta (Y_{q,n} - b) \cos \Delta\theta$$
dans lesquelles :
   – $\alpha$ : gain correctif à introduire sur la voie en phase,
   – $\beta$ : gain correctif à introduire sur la voie en quadrature,
   – a : décalage de tension sur la voie en phase,
   – b : décalage de tension sur la voie en quadrature,
   – $\Delta\theta$ : erreur de phase par rapport à la quadrature,
   – $Y_{p,n}$ : échantillons en cours sur la voie en phase avant correction,
   – $Y_{q,n}$ : échantillons en cours sur la voie en quadrature avant correction.

3. Démodulateur selon l'une des revendications 1 ou 2, caractérisé par le fait que le paramètre (a) représentant le décalage de tension sur la voie en phase est obtenu par moyenne des échantillons sur la voie en phase ($Y_{p,k}$) sur la base de la relation :

$$(1) \qquad a = \frac{1}{N} \sum_{k=1}^{N} Y_{p,k}$$

4. Démodulateur selon l'une des revendication 1 à 3, caractérisé par le fait que le paramètre (b) représentant de décalage de tension sur la voie en quadrature est obtenu par moyenne des échantillons sur la voie quadrature ($Y_{q,k}$) sur la base de la relation :

$$(2) \qquad b = \frac{1}{N} \sum_{k=1}^{N} Y_{q,k}$$

5. Démodulateur selon l'une des revendication 1 à 4, caractérisé par le fait que le paramètre ($\alpha$) représentant le gain correctif à introduire sur la voie en phase est obtenu à l'aide de la relation :

$$(4) \qquad \alpha = \frac{\sigma \sqrt{N} \sqrt{\sum_{k=1}^{N} (Y_{q,k} - b)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

6. Démodulateur selon l'une des revendication 1 à 5, caractérisé par le fait que le paramètre ($\beta$) représentant le gain correctif à introduire sur la voie en quadrature est déterminé sur la base de la relation :

$$(5) \qquad \beta = \frac{\sigma \sqrt{N} \sqrt{\sum_{k=1}^{N} (Y_{p,k} - a)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

7. Démodulateur selon l'une des revendication 1 à 6, caractérisé par le fait que le rapport $\alpha/\beta$ du gain correctif à introduire sur la voie en phase sur le gain correctif à introduire sur la voie en quadrature est obtenu par moyenne des carrés des différences ($Y_{p,k}$ - a) et ($Y_{q,k}$ - b), soit sur la base de la relation :

$$(3) \qquad \alpha / \beta = \sqrt{\sum_{k=1}^{N} (Y_{q,k} - b)^2} \Big/ \sqrt{\sum_{k=1}^{N} (Y_{p,k} - a)^2}$$

8. Démodulateur selon l'une des revendications 1 à 7, caractérisé par le fait que le paramètre ($\Delta\theta$) d'erreur de phase par rapport à la quadrature est estimé sur la base de la relation :

$$(6) \quad \sin \Delta\theta = - \sum_{k=1}^{N} (Y_{p,k} - a)(Y_{q,k} - b) \Big/ \sqrt{\sum_{k=1}^{N} (Y_{p,k} - a)^2 \sum_{k=1}^{N} (Y_{q,k} - b)^2}$$

9. Démodulateur selon l'une des revendications 1 à 8, caractérisé par le fait que les moyens (100) d'estimation comprennent un microprocesseur.

10. Démodulateur selon l'une des revendications 1 à 9, caractérisé par le fait que les moyens de correction (200) sont formés en logique câblée.

11. Démodulateur selon l'une des revendications 1 à 10, caractérisé par le fait que les moyens d'estimation (100) délivrent certains des paramètres estimés ($\alpha,\beta,\Delta\theta$) sous forme de logarithme et que les moyens de correction (200) comprennent des additionneurs (230, 231, 240, 250).

12. Démodulateur selon l'une des revendications 1 à 11, caractérisé par le fait que les moyens de correction (200) comprennent des mémoires (211, 221) opérant une transformation de nombres en leur logarithmes et des mémoires qui opèrent la transformation inverse.

13. Démodulateur selon l'une des revendications 1 à 12, caractérisé par le fait que les moyens de correction (200) comprennent des bascules de relecture (202b, 203b, 204b, 204d, 205, 206, 207) qui permettent de synchroniser les signaux.

14. Démodulateur selon l'une des revendications 1 à 13, caractérisé par le fait que les moyens de correction

EP 0 375 478 B1

(200) comprennent les composants numériques suivants :
– un premier jeu de bascules (202) qui reçoit le paramètre (a) représentant le décalage de tension sur la voie en phase,
– un deuxième jeu de bascules (203) qui reçoit le paramètre (b) représentant le décalage de tension sur la voie en quadrature,
– un troisième jeu de bascules (204) qui reçoit le Log du paramètre ($\alpha$) représentant le gain correctif à introduire sur la voie en phase,
– un quatrième jeu de bascules (205) qui reçoit le Log du paramètre ($\beta$) représentant le gain correctif à introduire sur la voie en quadrature,
– un cinquième jeu de bascule (206) qui reçoit le Log du sinus du paramètre ($\Delta\theta$) représentant l'erreur de phase par rapport à la quadrature,
– un sixième jeu de bascules (207) qui reçoit le Log du cosinus de paramètre ($\Delta\theta$) représentant l'erreur de phase,
– un premier additionneur (210) qui reçoit en entrée les échantillons en cours $Y_p$ sur la voie en phase et le signal issu du premier jeu de bascules (202),
– une première mémoire (211) qui convertit en Log le signal issu du premier additionneur (210),
– un septième jeu de bascules (212) relié à la sortie de la première mémoire (211),
– un deuxième additionneur (230) qui reçoit en entrée les signaux issus des 3ème et 7ème jeux de bascules (204, 212),
– un troisième additionneur (220) qui reçoit en entrée les échantillons en cours $Y_q$ sur la voie en quadrature et le signal issu du 2ème jeu de bascules (203),
– une seconde mémoire (221) qui convertit en Log le signal issu du 3ème additionneur (220),
– un huitième jeu de bascules (222) relié à la sortie de la seconde mémoire (221),
– un quatrième additionneur (231) qui reçoit en entrée les signaux issus des 4ème et 8ème jeux de bascules (205, 222),
– un cinquième additionneur (240) qui reçoit en entrée les signaux issus du 5ème jeu de bascules (206) et du 4ème additionneur (231),
– un sixième additionneur (250) qui reçoit en entrée les signaux issus du 6ème jeu de bascules (207) et du 4ème additionneur (231),
– un neuvième jeu de bascules (260) relié à la sortie du 2ème additionneur (230),
– une troisième mémoire (261) qui effectue la conversion inverse du passage au logarithme sur le signal issu du 9ème jeu de bascules (260),
– un dixième jeu de bascules (241) relié à la sortie du 5ème additionneur (240),
– une quatrième mémoire (242) qui effectue la conversion inverse du passage au logarithme sur le signal issu du 10ème jeu de bascules (241),
– un septième additionneur (262) qui reçoit en entrée les signaux issus de la 3ème et de la 4ème mémoires (261, 242) et délivre en sortie les échantillons corrigés $Z_p$,
– un onzième jeu de bascules (251) relié à la sortie du 6ème additionneur (250) et
– une cinquième mémoire (252) qui effectue la conversion inverse du passage au logarithme sur le signal issu du 11ème jeu de bascules (251), et délivre en sortie les échantillons corrigés $Z_q$.

## Patentansprüche

1. Demodulator für digitale Übertragung unter Ausnutzung der Verfahren zur Signalumsetzung in einem Grundband, mit einer Vorrichtung (12) zum Trennen eines in Form von zwei identischen Hilfssignalen empfangenen HF-Signals, einem ersten Mischer (20) zum Umsetzen eines ersten Hilfssignal in eine Inphase-Basiskomponente durch Multiplikation mit dem Ausgangssignal eines lokalen Oszillators (14), einem zweiten Mischer (30) zum Umsetzen des zweiten Hilfssignals in eine um 90° phasenverschobene Komponente (Quadratur-Komponente) durch Multiplikation des zweiten Hilfssignals mit dem um 90° phasenverschobenen Ausgangssignal des lokalen Oszillators (14), einer Filter- und Verstärkervorrichtung (22,24; 32,34) und mit jewells mit den Ausgängen der Mischer (20,30) verbundenen Analog/Digital-Wandlern (26, 36), **gekennzeichnet** durch
– eine Abschätzvorrichtung (100) zum Abschätzen der Fehler in am Ausgang der Analog/Digital-Wandler (26, 36) abgegriffenen Gruppen von Stichproben ($Y_{p,k}$, $Y_{q,k}$) in Form von fünd Parametern: die im Inphasepfad zuzuführende Korrekturverstärkung ($\alpha$), die im Quadraturpfad zuzuführende Korrekturverstärkung ($\beta$), die Spannungsverschiebung im Inphasepfad (a), die Spannungsverschiebung im Quadraturpfad (b) und den Phasenfehler ($\Delta\Theta$) bezüglich der Quadratur, und
– eine Vorrichtung (200) zum laufenden Korrigieren der Stichproben ($Y_p$, $Y_q$) auf der Basis der aufgrund

**12**

einer vorhergehenden Stichprobengruppe abgeschätzten Parameter.

2. Demodulator nach Anspruch 1, dadurch **gekennzeichnet,** daß die korrigierten Stichproben ($Z_{p,n}$) und ($Z_{q,n}$) gemäß der folgenden Ausdrücke bestimmt werden:

$$(7) \qquad Z_{p,n} = \alpha (Y_{p,n} - a) + \beta (Y_{q,n} - b) . \sin \Delta\theta$$

$$(8) \qquad Z_{q,n} = \beta (Y_{q,n} - b) \cos \Delta\theta$$

wobei

- $\alpha$ : die im Inphasepfad zuzuführende Korrekturverstärkung,
- $\beta$ : die im Quadraturpfad zuzuführende Korrekturverstärkung,
- a : die Spannungsverschiebung im Inphasepfad,
- b : die Spannungsverschiebung im Quadraturpfad,
- $\Delta\Theta$ : der Phasenfehler bezüglich der Quadaratur
- $Y_{p,n}$ : laufende Stichproben im Inphasepfad vor der Korrektur,
- $Y_{q,n}$ : laufende Stichproben im Quadraturpfad vor der Korrektur sind.

3. Demodulator nach Anspruch 1 oder 2, dadurch **gekennzeichnet,** daß der der Spannungsverschiebung im Inphasepfad entsprechende Parameter (a) mit der folgenden Beziehung aus den im Inphasepfad entnommenen Stichproben ($Y_{p,k}$) erhalten wird:

$$(1) \qquad a = \frac{1}{N} \sum_{k=1}^{N} Y_{p,k}$$

4. Demodulator nach einem der Ansprüche 1 bis 3, dadurch **gekennzeichnet**, daß der der Spannungsverschiebung im Quadraturpfad entsprechnede Parameter (b) mit der folgenden Beziehung aus den im Quadraturpfad entnommenen Stichproben ($Y_{q,k}$) erhalten wird:

$$(2) \qquad b = \frac{1}{N} \sum_{k=1}^{N} Y_{q,k}$$

5. Demodulator nach einem der Ansprüche 1 bis 4, dadurch **gekennzeichnet**, daß der Parameter ($\alpha$), der der im Inphasepfad zuzuführenden Korrekturverstärkung entspricht, mit Hilfe der folgenden Beziehung erhalten wird:

$$(4) \qquad \alpha = \frac{\sigma \sqrt{N} \sqrt{\sum_{k=1}^{N} (Y_{q,k} - b)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

6. Demodulator nach einem der Ansprüche 1 bis 6, dadurch **gekennzeichnet**, daß der Parameter ($\beta$), der der im Quadaraturpfad zuzuführenden Korrekturverstärkung entspricht, aufgrund der folgenden Beziehung bestimmt wird:

$$(5) \qquad \beta = \frac{\sigma \sqrt{N} \sqrt{\sum_{k=1}^{N} (Y_{p,k} - a)^2}}{\sqrt{\sum_{k=1}^{N} (Y_{p,k} - a)^2 \sum_{k=1}^{N} (Y_{q,k} - b)^2 - \left(\sum_{k=1}^{N} (Y_{p,k} - a)(Y_{q,k} - b)\right)^2}}$$

7. Demodulator nach einem der Ansprüche 1 bis 6, dadurch **gekennzeichnet**, daß das Verhältnis $(\alpha/\beta)$ der im Inphasepfad zuzuführenden Korrekturverstärkung zur im Quadaraturpfad zuzuführenden Korrekturverstärkung über die Quadarate der Differenzen $(Y_{p,k}-a)$ und $(Y_{q,k}-b)$ erhalten wird, wobei gilt:

$$(3) \quad \alpha/\beta = \sqrt{\sum_{k=1}^{N} (Y_{q,k} - b)^2} \Big/ \sqrt{\sum_{k=1}^{N} (Y_{p,k} - a)^2}$$

8. Demodulator nach einem der Ansprüche 1 bis 7, dadurch **gekennzeichnet**, daß der Parameter $(\Theta)$, welcher dem Phasenfehler bezüglich der Quadratur entspricht, aufgrund der folgenden Beziehung abgeschätzt wird:

$$(6) \quad \sin \Delta\theta = -\sum_{k=1}^{N} (Y_{p,k} - a)(Y_{q,k} - b) \Big/ \sqrt{\sum_{k=1}^{N}(Y_{p,k} - a)^2 \sum_{k=1}^{N}(Y_{q,k} - b)^2}$$

9. Demodulator nach einem der Ansprüche 1 bis 8, dadurch **gekennzeichnet**, daß die Abschätzvorrichtung (100) einen Mikroprozessor aufweist.

10. Demodulator nach einem der Ansprüche 1 bis 9, dadurch **gekennzeichnet**, daß die Korrekturvorrichtung (200) als verdrahtete Logik ausgebildet ist.

11. Demodulator nach einem der Ansprüche 1 bis 10, dadurch **gekennzeichnet**, daß die Abschätzvorrichtung (100) bestimmte abgeschätzte Parameter $(\alpha.\beta, \Theta)$ logarithmisch ausgibt und daß die Korrekturvorrichtung (200) Addierer (230, 231, 240, 250) aufweist.

12. Demodulator nach einem der Ansprüche 1 bis 11, dadurch **gekennzeichnet**, daß die Korrekturvorrichtung (200) Speicher (211, 221), die eine Transformation der Zahlen im Logarithmus durchführen, und Speicher, die die inverse Operation durchführen aufweist.

13. Demodulator nach einem der Ansprüche 1 bis 12, dadurch **gekennzeichnet**, daß die Korrekturvorrichtung (200) Kippschaltungen zum erneuten Lesen (202b, 203b, 204b, 204d, 205, 206, 207) aufweist, die das Synchronisieren der Signale ermöglichen.

14. Demodulator nach einem der Ansprüche 1 bis 13, dadurch **gekennzeichnet**, daß die Korrekturvorrichtung (200) folgende digitale Komponenten aufweist:

– einen ersten Satz Kippglieder (202), der den der Spannungsverschiebung im Inphasepfad entsprechenden Parameter (a) empfängt,

– einen zweiten Satz Kippglieder (203), der den der Spannungsverschiebung im Quadraturpfad entsprechenden Parameter (b) empfängt,

– einen dritten Satz Kippglieder (204), der den Logarithmus des Parameters $(\alpha)$ empfängt, welcher der im Inphasepfad zuzuführenden Korrekturspannung entspricht,

– einen vierten Satz Kippglieder (205), der den Logarithmus des Parameters $(\beta)$ empfängt, der der im Quadraturpfad zuzuführenden Korrekturspannung entspricht,

– einen fünften Satz Kippglieder (206), der den Logarithmus des Sinus des Parameters $(\Theta)$ empfängt, welcher dem Phasenfehler bezüglich der Quadratur entspricht,

– einen sechsten Satz Kippglieder (207), der den Logarithmus des Kosinus des Parameters $(\Theta)$ empfängt, welcher dem Phasenfehler entspricht,

– einen ersten Addierer (210), der an seinem Eingang die laufenden Stichproben $Y_p$ im Inphasepfad und das Ausgangssignal des ersten Kippgliedersatzes (202) empfängt,

– einen ersten Speicher (211), der das Ausgangssignal des ersten Addierers (210) in den Logarithmus umsetzt,

– einen siebten Satz Kippglieder (212), der mit dem Ausgang des ersten Speichers (211) verbunden ist,

– einen zweiten Addierer (230), der an seinem Eingang die Ausgangssignale des dritten und des siebten Kippgliedersatzes (204, 212) empfängt,

– einen dritten Addierer (220), der an seinem Eingang die laufenden Stichproben $Y_q$ aus dem Quadraturpfad und das Ausgangssignal des zweiten Kippgliedersatzes (203) empfängt,

– einen zweiten Speicher (221), der das Ausgangssignal des dritten Addierers (220) in den Logarithmus umsetzt,

– einen achten Satz Kippglieder (222), der mit dem Ausgang des zweiten Speichers (221) verbunden ist,
– einen vierten Addierer (231), der an seinem Ausgang die Ausgangssignale des vierten und des achten Kippgliedersatz (205, 222) empfängt,
– einen fünften Addierer (240), der an seinem Eingang die Ausgangangssignale des fünften Kippgliedersatzes (206) und des vierten Addierers (231) empfängt,
– einen sechsten Addierer (250), der an seinem Eingang die Ausgangssignale des sechsten Kippgliedersatzes (207) und des vierten Addierers (231) empfängt,
– einen neunten Satz Kippglieder (260), der mit dem Ausgang des zweiten Addierers (230) verbunden ist,
– einen dritten Speicher (261), der die zur Umsetzung in den Logarithmus inverse Umsetzung mit den Ausgangssignalen des neunten Kippgliedersatzes (260) ausführt,
– einen zehnten Satz Kippglieder (241), der mit dem Ausgang des fünften Addierers (240) verbunden ist,
– einen vierten Speicher (242), der die zur Umsetzung in den Logarithmus inverse Umsetzung mit den Ausgangssignalen des zehnten Kippgliedersatzes (241) ausführt,
– einen siebten Addierer (262), der an seinem Eingang die Ausgangssignale des dritten und des vierten Speichers (261, 242) empfängt und am Ausgang die korrigierten Stichproben $Z_p$ ausgibt,
– einen elften Satz Kippglieder (251), der mit dem Ausgang des sechsten Addierers (250) verbunden ist, und
– einen fünften Speicher (252), der die zur Umsetzung in den Logarithmus inverse Umsetzung der Ausgangssignale des elften Kippgliedersatzes (251) ausführt und an seinem Ausgang die korrigierten Stichproben $Z_q$ ausgibt.

## Claims

1. A demodulator for digital transmission using the technique of transposing the signal to baseband and comprising separator means (12) for operating a received HF signal into first and second identical auxiliary signals, a local oscillator (14) providing an in-phase output signal and a quadrature output signal at 90° to its in-phase output signal, a first mixer (20) for transposing the first auxiliary signal into an in-phase base component by multiplying it with the in-phase output signal from the local oscillator, a second mixer (30) for transposing the second auxiliary signal into a quadrature base component by multiplying it with the quadrature output signal from the local oscillator, and respective filter and amplifier means (22, 24; 32, 34) and analog-to-digital converters (26, 36) connected to the outputs from each of the mixers (20, 30), the demodulator being characterized in that it further includes:
– estimation means (100) suitable for estimating faults on groups of samples $Y_{p,k}$, $Y_{q,k}$ taken from the outputs of the analog-to-digital converters (26, 36), faults being estimated in the form of five parameters, namely: the corrective gain a to be applied to the in-phase channel, the corrective gain $\beta$ to be applied to the quadrature channel, the voltage offset $\underline{a}$ on the in-phase channel, the voltage offset $\underline{b}$ on the quadrature channel, and phase error $\delta\theta$ relative to true quadrature; and
– correction means (200) for correcting the current samples $Y_p$, $Y_q$, on the basis of the parameters estimated on an earlier group of samples.

2. A demodulator according to claim 1, characterized by the fact that the corrected samples $Z_{p,n}$ and $Z_{q,n}$ are established on the basis of the following equations:

$$(7) \qquad Z_{p,n} = \alpha(y_{p,n} - a) + \beta(Y_{p,n} - b).\sin \delta\theta$$
$$(8) \qquad Z_{q,n} = \beta(Y_{q,n} - b).\cos \delta\theta$$

in which:
$\alpha$ = the corrective gain to be applied to the in-phase channel;
$\beta$ = the corrective gain to be applied to the quadrature channel;
$\underline{a}$ = the voltage offset on the in-phase channel;
$\underline{b}$ = the voltage offset on the quadrature channel;
$\delta\theta$ = the phase error relative to true quadrature;
$Y_{p,n}$ = current samples on the in-phase channel prior to correction; and
$Y_{q,n}$ = current samples on the quadrature channel prior to correction.

3. A demodulator according to claim 1 or 2, characterized by the fact that the parameter $\underline{a}$ representing the voltage offset on the in-phase channel is obtained by taking the average of the samples $Y_{p,k}$ on the in-phase channel using the equation:

$$(1) \qquad a = \frac{1}{N} \sum_{k=1}^{N} Y_{p,k}$$

4. A demodulator according to any one of claims 1 to 3, characterized by the fact that the parameter $\underline{b}$ representing the voltage offset on the quadrature channel is obtained by taking the average of the samples $Y_{q,k}$ on the quadrature channel using the equation:

$$(2) \qquad b = \frac{1}{N} \sum_{k=1}^{N} Y_{q,k}$$

5. A demodulator according to any one of claims 1 to 4, characterized by the fact that the parameter a representative of the corrective gain to be applied to the in-phase channel is obtained using the equation:

$$(4) \qquad \alpha = \frac{\sigma \sqrt{N} \sqrt{\sum_{k=1}^{N} (Y_{q,k}-b)^2}}{\sqrt{\sum_{k=1}^{N} (Y_{p,k}-a)^2 . \sum_{k=1}^{N} (Y_{q,k}-b)^2 - [\sum_{k=1}^{N} (Y_{p,k}-a)(Y_{q,k}-b)]^2}}$$

6. A domodulator according to any one of claims 1 to 5, characterized by the fact that the parameter $\beta$ representative of the corrective gain to be applied to quadrature channel is determined using the equation:

$$(5) \qquad \beta = \frac{\sigma \sqrt{N} \sqrt{\sum_{k=1}^{N} (Y_{p,k}-a)^2}}{\sqrt{\sum_{k=1}^{N} (Y_{p,k}-a)^2 . \sum_{k=1}^{N} (Y_{q,k}-b)^2 - [\sum_{k=1}^{N} (Y_{p,k}-a)(Y_{q,k}-b)]^2}}$$

7. A demodulator according to any one of claims 1 to 6, characterized by the fact that the ratio $\alpha/\beta$ of the corrective gains to be applied to the in-phase channel and the quadrature channel is obtained by the root means square of the differences $(Y_{p,k} - a)$ and $(Y_{q,k} - b)$, i.e. on the basis of the equation:

$$(3) \qquad \alpha/\beta = \sqrt{\sum_{k=1}^{N} (Y_{q,k} - b)^2} \Bigg/ \sqrt{\sum_{k=1}^{N} (Y_{p,k} - a)^2}$$

8. A demodulator according to any one of claims 1 to 7, characterized by the fact that the parameter $\delta\theta$ representative of phase error relative to true quadrature is estimated on the basis of the equation:

$$(6) \qquad \sin \delta\theta = - \sum_{k=1}^{N} (Y_{p,k}-a)(Y_{q,k}-b) \Big/ \sqrt{\sum_{k=1}^{N} (Y_{p,k}-a)^2 . \sum_{k=1}^{N} (Y_{q,k}-b)^2}$$

9. A demodulator according to anyone of claims 1 to 8, characterized by the fact that the estimation means (100) include a microprocessor.

10. A demodulator according to any one of claims 1 to 9, characterized by the fact that the correction means (200) are constituted by hard-wired logic.

11. A demodulator according to any one of claims 1 to 10, characterized by the fact that the estimation means (100) deliver some of the estimated parameters ($\alpha$, $\beta$, $\delta\theta$) in the form of logarithms, and the correction means (200) include adders (230, 231, 240, 250).

12. A demodulator according to any one of claims 1 to 11, characterized by the fact that the correction means (200) include memories (211, 221) for transforming numbers into their logarithms, and memories for performing the inverse transformation.

13. A demodulator according to any one of claims 1 to 12, characterized by the fact that the correction means (200) include readback bistables (202b, 203b, 204b, 204d, 205, 206, 207) enabling signals to be synchronized.

14. A demodulator according to any one of claims 1 to 13, characterized by the fact that the correction means (200) comprise the following digital components:

- a first set of bistables (202) receiving the parameter $\underline{a}$ representing the voltage offset on the in-phase channel;

- a second set of bistables (203) receiving the parameter $\underline{b}$ representing the voltage offset on the quadrature channel;

- a third set of bistables (204) receiving the logarithm of the parameter a representative of the corrective gain to be applied to the in-phase channel;

- a fourth set of bistables (205) receiving the logarithm of the parameter $\beta$ representative of the corrective gain to be applied to the quadrature channel;

- a fifth set of bistables (206) receiving the logarithm of the sine of the parameter $\delta\theta$ representative of the phase error relative to true quadrature;

- a sixth set of bistables (207) receiving the logarithm of the cosine of the parameter $\delta\theta$ representative of phase error;

- a first adder (210) having its inputs connected to receive the current samples $Y_p$ on the in-phase channel and the signal from the first set of bistables (202);

- a first memory (211) converting the output signal from the first adder (210) into the logarithm thereof;

- a seventh set of bistables (212) connected to the output of the first memory (211);

- a second adder (230) having its inputs connected to receive the signals from the third and seventh sets of bistables (204, 212);

- a third adder (220) having its inputs connected to receive the current samples $Y_q$ on the quadrature channel and the signal from the second set of bistables (203);

- a second memory (221) converting the output signal from the third adder (220) into its logarithm;

- an eighth set of bistables (222) connected to the output from the second memory (221);

- a fourth adder (231) having its inputs connected to receive the signals from the fourth and eighth sets of bistables (205, 222);

- a fifth adder (240) having its inputs connected to receive the signals from the fifth set of bistables (206) and from the fourth adder (231);

- a sixth adder (250) having its inputs connected to receive the signals from the sixth set of bistables (207) and from the fourth adder (231);

- a ninth set of bistables (260) connected to the output from the second adder (230);

- a third memory (261) for providing the antilogarithm of the signal delivered by the ninth set of bistables (260);

- a tenth set of bistables (241) connected to the output from the fifth adder (240);

- a fourth memory (242) for taking the antilogarithm of the signal delivered by the tenth st of bistables (241);

- a seventh adder (262) having its inputs connected to receive the signals from the third and fourth memories (261, 242) and delivering corrected samples $Z_p$ at its output;

- an eleventh set of bistables (251) connected to the output from the sixth adder (250); and

– a fifth memory (252) providing the antilogarithm of the signal delivered by the eleventh set of bistables (251) and delivering corrected samples $Z_q$ at its output.

# FIG_1

## Etat de la technique

TRAITEMENT NUMERIQUE

Convertis-seur A/N 26

Convertis-seur A/N 36

$Y_{p,k}$

$Y_{q,k}$

40

Ampli 24

Ampli 34

Filtre 22

Filtre 32

Oscillateur local 14

Melangeur

Melangeur

17

0°

90°

18

16

20

30

12

Commande automatique de gain

10

Signal reçu

19

## FIG_2

TRAITEMENT NUMERIQUE — 40

$Z_{p,n}$  $Z_{q,n}$

Correction — 200, 201

Estimation des defauts — 100

$Y_{p,k}$  $Y_{q,k}$

Convertis-seur A/N — 26

Convertis-seur A/N — 36

Ampli — 24

Ampli — 34

Filtre — 22

Filtre — 32

Oscillateur local — 14

Melangeur — 20

Melangeur — 30

17  0°  90°  18

16

Commande automatique de gain — 10

12

Signal reçu

$\underline{\textsf{FIG.3}}$   ORGANIGRAMME DU TRAITEMENT REALISE
PAR LES MOYENS D'ESTIMATION 100

FIG_4

FIG_5

FIG_6

EP 0 375 478 B1

FIG_7

Log $\alpha(Yp-a)$ (provenant de 260)

signe de $(Yp-a)$
(provenant de 212)

Partie
entiere+signe
(Log)

Mantisse

261 — PROM

$\alpha(Yp-a)$

$\beta(Yq-b)\sin \Delta\theta$ (provenant de 242)

263 — D

Q

$A_0 A_1 A_2 A_3 B_0 B_1 B_2 B_3$

262a

$F_0$ $F_1$ $F_2$ $F_3$

$A_0 A_1 A_2 A_3 B_0 B_1 B_2 B_3$

262b

$F_0$ $F_1$ $F_2$ $F_3$

$$Zp = \alpha(Yp-a) + \beta(Yq-b)\sin\Delta\theta$$

## FIG_8